# EUROPÄISCHE PATENTSCHRIFT

(11) **EP 2 888 782 B1**
(45) Veröffentlichungstag und Bekanntmachung des Hinweises auf die Patenterteilung: **06.09.2017**
(21) Anmeldenummer: 13736818.9
(22) Anmeldetag: 02.07.2013
(51) Int. Cl.: H01M 10/42, H02J 7/00

(54) **BATTERIEZELLE, BATTERIE, VERFAHREN ZUR ENTLADUNG EINER BATTERIEZELLE UND KRAFTFAHRZEUG**
BATTERY CELL, BATTERY, METHOD FOR DISCHARGING A BATTERY CELL, AND MOTOR VEHICLE
ÉLÉMENT DE BATTERIE, BATTERIE, PROCÉDÉ DE DÉCHARGE D'UN ÉLÉMENT DE BATTERIE ET VÉHICULE À MOTEUR

(30) Priorität: 24.08.2012 DE 102012215070
(43) Veröffentlichungstag der Anmeldung: 01.07.2015
(73) Patentinhaber: Robert Bosch GmbH, 70442 Stuttgart (DE); Samsung SDI Co., Ltd., Yongin-si, Gyeonggi-do 446-577 (KR)
(72) Erfinder: SCHWEINBENZ, Jochen, 70469 Stuttgart (DE); KOHLBERGER, Markus, 70174 Stuttgart (DE)
(74) Vertreter: Bee, Joachim
(86) Internationale Anmeldenummer: PCT/EP2013/063880
(87) Internationale Veröffentlichungsnummer: WO 2014/029537

(56) Entgegenhaltungen:
- EP-A1- 2 403 036
- US-A1- 2010 119 881
- US-H- H1 765

## Beschreibung

Die vorliegende Erfindung betrifft eine Batteriezelle sowie eine Batterie mit einer Mehrzahl erfindungsgemäßer Batteriezellen. Weiterhin betrifft die vorliegende Erfindung ein Verfahren zur Entladung einer erfindungsgemäßen Batteriezelle sowie ein Kraftfahrzeug, welches wenigstens eine erfindungsgemäße Batteriezelle beziehungsweise eine erfindungsgemäße Batterie aufweist.

Dabei ist die vorliegende Erfindung insbesondere auf
Lithium-Ionen-Batteriezellen bezogen. Derartige Zellen können zum Beispiel bei elektrischer, mechanischer und/oder thermischer Überlast, zum Beispiel beim Auftreten eines internen oder externen Kurzschlusses, sich innerhalb kürzester Zeit sehr stark erwärmen. Diese Erwärmung ist üblicherweise mit einem ebenfalls starken Druckanstieg in der Batteriezelle verbunden. Für einen Druckausgleich weisen Batteriezellen daher oftmals eine Berstöffnung auf. Eine solche Berstöffnung kann mit einem Entgasungssystem verbunden sein, welches aus der Batteriezelle austretende Fluide, wie zum Beispiel unzersetzte Elektrolyt-Komponenten, oder auch brennbare Zersetzungsprodukte, wie Kohlenmonoxid, Wasserstoff oder Methan, sowie auch als Zersetzungsprodukt das Leitsalz Fluor-Wasserstoff (HF) oder auch phosphorhaltige Verbindungen, wie zum Beispiel Phosphoroxitrifluorid (POF₃), entweichen lassen kann. Zur Kontrolle und/oder Verhinderung derartiger kritischer Zustände, in denen die Berstöffnung geöffnet wird, werden Überwachungseinheiten an jeder Batteriezelle oder auch an mehreren Batteriezellen angeordnet.

### Stand der Technik

Es ist bekannt, zur Verhinderung einer Überladung einer Batteriezelle eine Sicherung in dieser vorzusehen, die bei Überlast auslöst und somit eine weitere Ladung beziehungsweise Entladung der Batterie verhindert.

Aus der US 2005/0275370 A1 ist eine Sicherheitseinrichtung für eine Lithium-Ionen-Batterie bekannt sowie auch eine derartige Batterie, welche mit der Sicherheitseinrichtung verbunden ist. Dabei ist eine Sicherung mit einem Kontakt der Batterie elektrisch leitfähig verbunden. Bei Auslösung der Sicherung kann somit die Batterie nicht weiter geladen oder entladen werden.

Die US 7,163,757 B2 offenbart eine wiederaufladbare Batterie, die innerhalb eines Schutzstromkreises eine Sicherung aufweist, welche mit einem Kontakt der Batterie in Reihe geschaltet ist. Auch hier verhindert die Sicherung bei Auslösung eine weitere Ladung beziehungsweise Entladung der Batterie.

Die JP 2001/298867 A offenbart eine Sicherheitseinrichtung, mit der die Überladung einer Lithium-Ionen-Batterie verhindert werden kann. Eine Überwachungseinrichtung ist dabei an eine Elektrode der Batteriezelle angeschlossen.

Darüber hinaus ist aus der US 2010/0119881 A1 eine Lithium-Ionen-Batterie mit einer Überwachungseinrichtung und Sicherung gemäß dem Oberbegriff des Anspruchs 1 bekannt.

### Offenbarung der Erfindung

Es wird erfindungsgemäß eine Batteriezelle, insbesondere eine Lithium-Ionen-Batteriezelle, zur Verfügung gestellt, die eine Überwachungseinrichtung zur Kontrolle der Ladung, Spannung und/oder der Temperatur der Batteriezelle sowie ein erstes Terminal zum elektrischen Anschluss der Batteriezelle aufweist, wobei das erste Terminal elektrisch leitfähig mit einer ersten Elektrode der Batteriezelle verbunden ist. Weiterhin weist die erfindungsgemäße Batteriezelle eine Sicherung auf, die zur Unterbrechung des zum ersten Terminal führenden Strompfades dient, wobei die Überwachungseinrichtung mit einem ersten Kontakt an diesen Strompfad zwischen der ersten Elektrode und der Sicherung angeschlossen ist. Erfindungsgemäß ist vorgesehen, dass die Überwachungseinrichtung mit einem zweiten Kontakt an diesen Strompfad zwischen der Sicherung und dem ersten Terminal angeschlossen ist. Der Strompfad führt von der ersten Elektrode zum ersten Terminal. Das erste Terminal ist dabei ein extra Bauteil und mit dem Kollektor elektrisch leitfähig verbunden oder aber auch ein integraler Bestandteil des Kollektors.

### Vorteile der Erfindung

Der Vorteil der vorliegenden Erfindung liegt insbesondere darin, dass trotz Auslösung der Sicherung die Kommunikation mit der Überwachungseinrichtung über das erste Terminal weiter erfolgen kann.

Weiterhin ist auch eine Messung der Spannung in der Zelle möglich, nämlich über den ersten Kontakt am Strompfad, ohne dass dies durch die ausgelöste Sicherung behindert werden könnte.

Das heißt, dass trotz Unterbrechung des Strompfades und damit Absicherung gegen eine überladungsbedingte Erwärmung die Überwachungseinheit weiterhin im Wesentlichen voll funktionsfähig ist. Dies wird durch ein Minimum an zusätzlich eingesetzten Bauteilen beziehungsweise Leitungen und demzufolge außerordentlich kostengünstig erreicht.

Vorzugsweise umfasst die erfindungsgemäße Batteriezelle einen zwischen der ersten Elektrode und dem ersten Terminal angeordneten ersten Kollektor zur Realisierung des Strompfades von der ersten Elektrode zum ersten Terminal. Dieser Kollektor kann in bevorzugter Ausgestaltung direkt mit der ersten Elektrode verbunden sein.

Weiterhin ist die erfindungsgemäße Batteriezelle derart ausgestaltet, dass sie ein Gehäuse umfasst, wobei die Überwachungseinrichtung in dem Gehäuse angeordnet ist. Das heißt, dass die Überwachungseinrichtung in dem Gehäuseinnenraum platziert ist.

In weiterer günstiger Ausgestaltung ist vorgesehen, dass die Sicherung im oder am ersten Kollektor angeordnet ist. Dadurch kann die Sicherung den Strompfad, der im beziehungsweise am ersten Kollektor realisiert wird, unterbrechen.

Weiterhin sollte die erfindungsgemäße Batteriezelle eine zweite Elektrode sowie einen mit dieser zweiten Elektrode elektrisch leitfähig verbundenen zweiten Kollektor umfassen, wobei die Überwachungseinrichtung über einen dritten Kontakt an den zweiten Kollektor angeschlossen ist. Dadurch lässt sich in einfacher Weise eine Kommunikation mit der Überwachungseinrichtung von außen über die beiden Terminals beziehungsweise über die beiden Kollektoren realisieren.

Vorzugsweise sind die Kontakte, nämlich der erste, der zweite und/oder der dritte Kontakt, innerhalb des Gehäuses positioniert. Erfindungsgemäß ist vorgesehen, dass die erste Elektrode elektrisch leitfähig mit dem Gehäuse und/oder einem Gehäusedeckel der Batteriezelle verbunden ist, wobei der zweite Kontakt am Gehäuse und/oder am Gehäusedeckel realisiert ist. Das heißt, dass das Gehäuse beziehungsweise der Gehäusedeckel auf dem Potential der ersten Elektrode liegt und zur Vereinfachung der elektrischen Anschlüsse den zweiten Kontakt mit der Überwachungseinrichtung im Strompfad ausbildet. Vorzugsweise ist dabei der zweite Kontakt auch innerhalb des Gehäuseinnenraumes angeordnet.

In weiterer günstiger Ausgestaltungsform der erfindungsgemäßen Batteriezelle ist vorgesehen, dass das erste Terminal und/oder der erste Kollektor als eine Leitung zur Kommunikation mit der Überwachungseinrichtung nutzbar ist. Dies ist insbesondere dann vorteilhaft, wenn auch ein zweites Terminal, welches mit der zweiten Elektrode elektrisch leitfähig verbunden ist, sowie auch der zweite Kollektor zur Kommunikation mit der Überwachungseinrichtung nutzbar sind, so dass sämtliche Kommunikationen mit der Überwachungseinrichtung über die Terminals erfolgen können. Das heißt, dass eine Kommunikation mit der Überwachungseinrichtung zwecks Auslesung und/oder Steuerung der Überwachungseinrichtung über das erste Terminal, vorzugsweise über beide Terminals und demzufolge über den Hochspannungsstrompfad der Batteriezelle realisiert wird.

Dadurch lässt sich die erfindungsgemäße Batteriezelle trotz Auslösung der Sicherung überwachen.

Weiterhin wird eine erfindungsgemäß eine Batterie zur Verfügung gestellt, welche mehrere der erfindungsgemäßen Batteriezellen aufweist.

Die Erfindung betrifft außerdem ein Verfahren zur Entladung einer erfindungsgemäßen Batteriezelle, bei dem ein Stromfluss über die Überwachungseinrichtung zwischen der ersten Elektrode und der zweiten Elektrode realisiert wird, wobei die Sicherung den Strompfad zwischen der ersten Elektrode und dem ersten Terminal schließt oder auch unterbrochen hat. Das heißt, dass neben den genannten Vorteilen der Überwachung der Batteriezelle selbst bei ausgelöster Sicherung die erfindungsgemäß angeordnete Überwachungseinheit auch dazu dienen kann, die Batteriezelle gesteuert zu entladen und somit, insbesondere in Situationen, in denen wenigstens ein physikalischer Parameter einen Soll-Bereich überschritten hat, Gefahrenpotential zu verringern. Dadurch, dass die Kommunikation mit der Überwachungseinrichtung über die Terminals der Batteriezelle erfolgen kann, ist auch eine Steuerung dieses Vorganges in einfacher und zuverlässiger Weise möglich.

Die Erfindung ergänzend wird außerdem ein Kraftfahrzeug zur Verfügung gestellt, welches insbesondere ein elektromotorisch antreibbares Kraftfahrzeug sein kann, das wenigstens eine Batteriezelle oder auch eine erfindungsgemäße Batterie aufweist, wobei die Batteriezelle beziehungsweise die Batterie mit einem Antriebssystem des Kraftfahrzeuges verbunden ist.

### Zeichnungen

Die Erfindung wird im Folgenden anhand der in den beiliegenden Zeichnungen dargestellten Ausführungsbeispiele erläutert. Es zeigen:
Figur 1 einen Gehäusedeckel einer erfindungsgemäßen Batteriezelle mit Elektroden und Kollektoren sowie einer Sicherung in Schnittansicht, und
Figur 2 einen Gehäusedeckel mit Elektroden und Kollektoren sowie einer ausgelösten Sicherung in Schnittansicht.

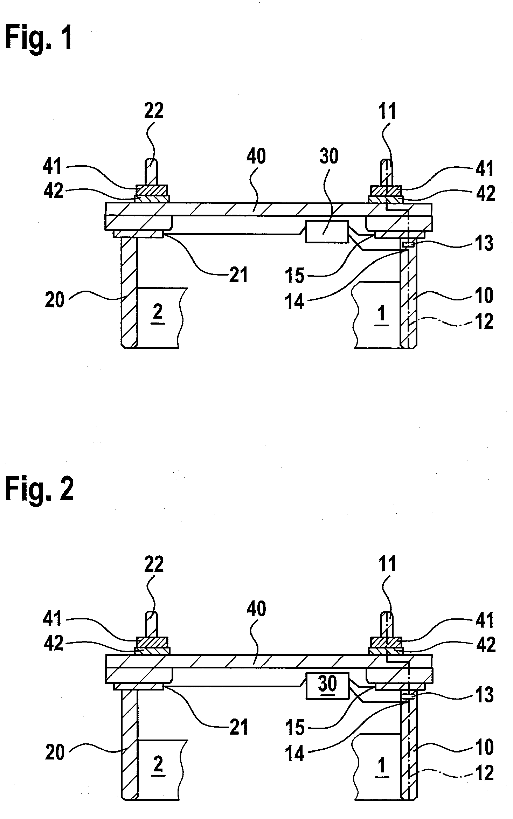

In den Figuren 1 und 2 sind jeweils die erste Elektrode 1 und die zweite Elektrode 2 einer erfindungsgemäßen Batteriezelle angedeutet, die jeweils mit dem ersten Kollektor 10 und dem zweiten Kollektor 20 elektrisch leitfähig verbunden sind. Der erste Kollektor 10 ist mit dem ersten Terminal 11 elektrisch leitfähig verbunden, und der zweite Kollektor 20 ist mit dem zweiten Terminal 22 elektrisch leitfähig verbunden. Der Gehäusedeckel 40 definiert dabei die Grenze des Gehäuseinnenraumes, so dass die erste Elektrode 1 und die zweite Elektrode 2 sowie auch der erste Kollektor 10 und der zweite Kollektor 20 im Gehäuseinnenraum angeordnet sind und das erste Terminal 11 sowie auch das zweite Terminal 22 außerhalb des Gehäuses angeordnet sind. Zu diesem Zweck führt der jeweilige Kollektor 10, 20 beziehungsweise das jeweilige Terminal 11, 22 durch den Gehäusedeckel 40 hindurch. Zur Befestigung des jeweiligen Terminals 11, 22 ist jeweils eine Befestigungseinrichtung 41, wie zum Beispiel eine Mutter oder auch eine Klemmverbindung, über einer Dichtung 42 vorgesehen, die das jeweilige Terminal 11, 22 gegenüber dem Gehäusedeckel 40 abdichtet.

Im ersten Kollektor 10 ist strich-punktiert der Strompfad 12 angedeutet, in dem elektrischer Strom von der ersten Elektrode 1 über den ersten Kollektor 10 zum ersten Terminal 11 geleitet wird. In diesem Strompfad 12 im ersten Kollektor 10 ist eine Sicherung 13 angeordnet, die bei Überlast den Strompfad 12 trennen kann. Das heißt, dass bei unzulässig hohen Spannungs- beziehungsweise Stromstärkewerten an der Batteriezelle die Sicherung 13 den Strompfad 12 trennt, so dass die Batteriezelle nicht weiter geladen oder entladen werden kann. In Figur 1 ist dabei die Sicherung 13 im leitfähigen Zustand dargestellt, wobei in Figur 2 die Sicherung im ausgelösten und somit den Strompfad 12 trennenden Zustand dargestellt ist.

Innerhalb des Batteriegehäuses ist eine Überwachungseinrichtung 30 zur Überwachung der Ladung, Spannung und/oder Temperatur der Batteriezelle angeordnet. Diese Überwachungseinrichtung 30 ist mit einem ersten Kontakt 14 am ersten Kollektor 10 angeschlossen, und zwar zwischen der ersten Elektrode 1 und der Sicherung 13. Des Weiteren ist die Überwachungseinrichtung 30 mit einem zweiten Kontakt 15 am ersten Kollektor 10 zwischen der Sicherung 13 und dem ersten Terminal 11 angeschlossen. Mit einem dritten Kontakt 21 ist die Überwachungseinrichtung 30 an dem zweiten Kollektor 20 angeschlossen. Es ist ersichtlich, dass eine Kommunikation mit der Überwachungseinrichtung von außen über die Terminals 11, 22 realisiert werden kann. Selbst wenn es zur Auslösung der Sicherung 13 kommt, wie in Figur 2 dargestellt, kann über den zweiten Kontakt 15 am ersten Kollektor 10 weiterhin die Spannung in der Batteriezelle mittels der Überwachungseinrichtung 30 festgestellt werden und über die Terminals 11, 22 kommuniziert werden.

Eine derartige Auslösung der Sicherung 13 hat ihre Ursache oftmals in einer Überlast-Situation und damit in einer potentiellen Gefahrensituation. Zwecks Gefahrminderung lässt sich über die Überwachungseinrichtung 30 gesteuert ein Entladungsstrom zwischen den beiden Elektroden 1, 2 realisieren, nämlich über den ersten Kontakt 14 sowie den dritten Kontakt 21, obwohl die Sicherung 13 ausgelöst wurde.

## Patentansprüche

1. Batteriezelle, insbesondere Lithium-Ionen-Batteriezelle, mit einer Überwachungseinrichtung (30) zur Kontrolle der Ladung, Spannung und/oder Temperatur der Batteriezelle und mit einem ersten Terminal (11) zum elektrischen Anschluss der Batteriezelle, wobei das erste Terminal (11) elektrisch leitfähig mit einer ersten Elektrode (1) der Batteriezelle verbunden ist sowie mit einer Sicherung (13), die zur Unterbrechung des zum ersten Terminal führenden Strompfades (12) dient, wobei die Überwachungseinrichtung (30) mit einem ersten Kontakt (14) an diesen Strompfad (12) zwischen der ersten Elektrode (1) und der Sicherung (13) angeschlossen ist,
**dadurch gekennzeichnet, dass**
die Überwachungseinrichtung (30) mit einem zweiten Kontakt (15) an diesen Strompfad (12) zwischen der Sicherung (13) und dem ersten Terminal (11) angeschlossen ist, dass die Batteriezelle ein Gehäuse umfasst, wobei die Überwachungseinrichtung (30) in dem Gehäuse angeordnet ist, und dass die erste Elektrode (1)
elektrisch leitfähig mit dem Gehäuse und/oder einem Gehäusedeckel (40) der Batteriezelle verbunden ist, wobei der zweite Kontakt am Gehäuse und/oder am Gehäusedeckel (40) realisiert ist.

2. Batteriezelle nach Anspruch 1, umfassend einen zwischen der ersten Elektrode (1) und dem ersten Terminal (11) angeordneten ersten Kollektor (10) zur Realisierung des Strompfades (12) von der ersten Elektrode (1) zum ersten Terminal (11).

3. Batteriezelle nach einem der Ansprüche 1 und 2, bei der die Sicherung (13) im oder am ersten Kollektor (10) angeordnet ist.

4. Batteriezelle nach einem der vorhergehenden Ansprüche, die eine zweite Elektrode (2) sowie einen mit dieser zweiten Elektrode (2) elektrisch leitfähig verbundenen zweiten Kollektor (20) umfasst, wobei die Überwachungseinrichtung (30) über einen dritten Kontakt (21) an den zweiten Kollektor (20) angeschlossen ist.

5. Batteriezelle nach einem der vorhergehenden Ansprüche, bei der der erste, der zweite und/oder der dritte Kontakt (15, 21) innerhalb des Gehäuses realisiert sind.

6. Batteriezelle nach einem der vorhergehenden Ansprüche, bei der das erste Terminal (11) und/oder der erste Kollektor (10) als eine Leitung zur Kommunikation mit der Überwachungseinrichtung (30) nutzbar ist.

7. Batterie, umfassend mehrere der Batteriezellen gemäß einem der Ansprüche 1 bis 6.

8. Kraftfahrzeug, insbesondere elektromotorisch antreibbares Kraftfahrzeug, umfassend wenigstens eine Batteriezelle gemäß einem der Ansprüche 1 bis 6 und/oder eine Batterie gemäß Anspruch 7, wobei die Batteriezelle beziehungsweise die Batterie mit einem Antriebssystem des Kraftfahrzeuges verbunden ist.

9. Verfahren zur Entladung einer Batteriezelle gemäß einem der Ansprüche 4 bis 6, bei dem ein Stromfluss über die Überwachungseinrichtung (30) zwischen der ersten Elektrode (1) und der zweiten Elektrode (2) realisiert wird, wobei
a) die Sicherung (13) den Strompfad (12) zwischen der ersten Elektrode (1) und dem ersten Terminal (11) schließt,
oder
b) die Sicherung (13) den Strompfad (12) zwischen der ersten Elektrode (1) und dem ersten Terminal (11) unterbrochen hat.

## Claims

1. Battery cell, in particular lithium-ion battery cell, comprising a monitoring device (30) for controlling the charge, voltage and/or temperature of the battery cell, and comprising a first terminal (11) for electrical connection of the battery cell, wherein the first terminal (11) is electrically conductively connected to a first electrode (1) of the battery cell and to a fuse (13) which serves to interrupt the current path (12) leading to the first terminal, wherein the monitoring device (30) is connected to this current path (12) between the first electrode (1) and the fuse (13) by way of a first contact (14),
**characterized in that**
the monitoring device (30) is connected to this current path (12) between the fuse (13) and the first terminal (11) by way of a second contact (15), **in that** the battery cell comprises a housing, wherein the monitoring device (30) is arranged in the housing, and **in that** the first electrode (1) is electrically conductively connected to the housing and/or to a housing cover (40) of the battery cell, wherein the second contact is realized on the housing and/or on the housing cover (40).

2. Battery cell according to Claim 1, comprising a first collector (10), which is arranged between the first electrode (1) and the first terminal (11), for realizing the current path (12) from the first electrode (1) to the first terminal (11).

3. Battery cell according to either of Claims 1 and 2, in which the fuse (13) is arranged in or on the first collector (10).

4. Battery cell according to one of the preceding claims, which comprises a second electrode (2) and a second collector (20) which is electrically conductively connected to this second electrode (2), wherein the monitoring device (30) is connected to the second collector (20) by means of a third contact (21).

5. Battery cell according to one of the preceding claims, in which the first, the second and/or the third contact (15, 21) are/is realized within the housing.

6. Battery cell according to one of the preceding claims, in which the first terminal (11) and/or the first collector (10) can be used as a line for communication with the monitoring device (30).

7. Battery comprising a plurality of the battery cells according to one of Claims 1 to 6.

8. Motor vehicle, in particular motor vehicle which can be driven by electric motor, comprising at least one battery cell according to one of Claims 1 to 6 and/or a battery according to Claim 7, wherein the battery cell or the battery is connected to a drive system of the motor vehicle.

9. Method for discharging a battery cell according to one of Claims 4 to 6, in which a current flow is realized between the first electrode (1) and the second electrode (2) across the monitoring device (30), wherein
a) the fuse (13) closes the current path (12) between the first electrode (1) and the first terminal (11),
or
b) the fuse (13) has interrupted the current path (12) between the first electrode (1) and the first terminal (11).

## Revendications

1. Cellule de batterie, notamment cellule de batterie aux ions de lithium, comprenant un dispositif de surveillance (30) destiné à contrôler la charge, la tension et/ou la température de la cellule de batterie et comprenant une première borne (11) destinée au branchement électrique de la cellule de batterie, la première borne (11) étant reliée de manière électriquement conductrice à une première électrode (1) de la cellule de batterie ainsi qu'à un fusible (13) qui sert à interrompre le chemin de courant (12) qui mène à la première borne, le dispositif de surveillance (30) étant raccordé avec un premier contact (14) à ce chemin de courant (12) entre la première électrode (1) et le fusible (13),
**caractérisée en ce que**
le dispositif de surveillance (30) est raccordé avec un deuxième contact (15) à ce chemin de courant (12) entre le fusible (13) et la première borne (11), **en ce que** la cellule de batterie comprend un boîtier, le dispositif de surveillance (30) étant disposé dans le boîtier, et **en ce que** la première électrode (1) est reliée de manière électriquement conductrice au boîtier et/ou à un couvercle de boîtier (40) de la cellule de batterie, le deuxième contact étant réalisé sur le boîtier et/ou sur le couvercle de boîtier (40).

2. Cellule de batterie selon la revendication 1, comprenant un premier collecteur (10) disposé entre la première électrode (1) et la première borne (11) en vue de réaliser le chemin de courant (12) de la première électrode (1) à la première borne (11).

3. Cellule de batterie selon l'une des revendications 1 et 2, avec laquelle le fusible (13) est disposé dans ou sur le premier collecteur (10).

4. Cellule de batterie selon l'une des revendications précédentes, laquelle comprend une deuxième électrode (2) ainsi qu'un deuxième collecteur (20) relié de manière électriquement conductrice avec cette deuxième électrode (2), le dispositif de surveillance (30) étant raccordé au deuxième collecteur (20) par le biais d'un troisième contact (21).

5. Cellule de batterie selon l'une des revendications précédentes, avec laquelle le premier, le deuxième et/ou le troisième contact (15, 21) sont réalisés à l'intérieur du boîtier.

6. Cellule de batterie selon l'une des revendications précédentes, avec laquelle la première borne (11) et/ou le premier collecteur (10) peuvent être utilisés comme une ligne pour la communication avec le dispositif de surveillance (30).

7. Batterie, comprenant plusieurs des cellules de batterie selon l'une des revendications 1 à 6.

8. Véhicule automobile, notamment véhicule automobile pouvant être propulsé par moteur électrique, comprenant au moins une cellule de batterie selon l'une des revendications 1 à 6 et/ou une batterie selon la revendication 7, la cellule de batterie ou la batterie étant reliée à un système de propulsion du véhicule automobile.

9. Procédé de décharge d'une cellule de batterie selon l'une des revendications 4 à 6, selon lequel un flux de courant est réalisé par le biais du dispositif de surveillance (30) entre la première électrode (1) et la deuxième électrode (2),
a) le fusible (13) fermant le chemin de courant (12) entre la première électrode (1) et la première borne (11),
ou
b) le fusible (13) ayant interrompu le chemin de courant (12) entre la première électrode (1) et la première borne (11).
